# EUROPÄISCHE PATENTSCHRIFT

(11) **EP 2 940 224 B1**
(45) Veröffentlichungstag und Bekanntmachung des Hinweises auf die Patenterteilung: **23.12.2020**
(21) Anmeldenummer: 15165698.0
(22) Anmeldetag: 29.04.2015
(51) Int. Cl.: E03F 5/22, B65D 88/76, E03F 11/00, E03B 3/03

(54) **FESTSTOFFTRENNSYSTEM**
SOLID SEPARATION SYSTEM
SYSTÈME DE SÉPARATION DE MATIÈRE SOLIDE

(30) Priorität: 30.04.2014 DE 102014208202
(43) Veröffentlichungstag der Anmeldung: 04.11.2015
(73) Patentinhaber: KSB SE & Co. KGaA, 67227 Frankenthal (DE)
(72) Erfinder: MÜLLER, Enrico, 67227 Frankenthal (DE); PENSLER, Thomas, 67227 Frankenthal (DE)

(56) Entgegenhaltungen:
- EP-A1- 1 108 822
- WO-A1-2013/044320
- DE-U1-202010 001 472
- GB-A- 522 499
- US-A- 5 881 760

## Beschreibung

Die Erfindung betrifft ein Feststofftrennsystem, mit zumindest einem Sperrstoff-Sammelbehälter für hierdurch geführtes und mit Sperrstoffen belastetes Abwasser, und mit einem Flüssigkeits-Sammelbehälter für das von Sperrstoffen befreite und in dem Sperrstoff-Sammelbehälter vorgereinigte Abwasser.

Solche Feststofftrennsysteme in Gestalt von Abwasserhebeanlagen sind in vielfältiger Ausführungsform im Stand der Technik bekannt. Dazu sei nur beispielhaft auf die EP 1 108 822 A1 oder auch die DE 1 609 166 verwiesen, Bekanntermaßen werden solche Feststofftrennsysteme im Regelfall dazu genutzt, endseitig eines Abwasserstauraumes gesammeltes Abwasser auf ein bestimmtes Niveau zu heben. Danach erfolgt dann meistens eine Weiterbehandlung in einer Abwasserreinigungsanlage.

Im weiteren Stand der Technik nach der GB 522,499 werden Verbesserungen an Flüssigkeitstanks beschrieben, um im Innern auftretende Druckspitzen aufnehmen zu können. Dazu sind die Seitenwände der bekannten Flüssigkeitstanks vom Boden bis zum Dach gesehen mit durchlaufenden Verstärkungsrippen ausgerüstet. Ähnliche durchlaufende und sogar insgesamt umlaufende Verstärkungsrippen beschreibt die WO 2013/044320 A1 bei einer Vorrichtung zur Abwasserbehandlung.

Im Detail wird beispielsweise bei dem Feststofftrennsystem nach der EP 1 108 822 A1 so vorgegangen, dass mit Sperrstoffen bzw. Feststoffen belastetes Abwasser über einen Zulaufverteiler und eine Zuleitung in den Sperrstoff-Sammelbehälter gelangt. Hier wird das Abwasser von den Sperrstoffen befreit, die in dem Sperrstoff-Sammelbehälter verbleiben. Dazu ist meistens ein Sieb im Sperrstoff-Sammelbehälter vorgesehen. Dadurch findet eine Vorreinigung des Abwassers statt.

Das vorgereinigte Abwasser gelangt über eine Ableitung in und durch eine Pumpe und von dort in den Flüssigkeits-Sammelbehälter, und zwar entgegen der Förderrichtung der Pumpe. Ist der Flüssigkeits-Sammelbehälter mit dem vorgereinigten Abwasser gefüllt, so wird die Pumpe eingeschaltet. Dadurch wird im Sperrstoff-Sammelbehälter eine Klappe geschlossen, so dass weiterer Zulauf unterbunden wird und die Sperrstoffe mit dem durch den Sperrstoff-Sammelbehälter geführten Abwasser zur weiteren Behandlung abgeführt werden.

Solche Feststofftrennsysteme werden typischerweise in Betonschächten aufgestellt. Die Gehäuse für einerseits den Sperrstoff-Sammelbehälter und andererseits den Flüssigkeits-Sammelbehälter sind regelmäßig aus Metall gefertigt, können aber auch aus Kunststoff hergestellt werden. Insbesondere bei dem Flüssigkeits-Sammelbehälter ergibt sich in der Praxis das Problem, dass nicht nur aus einer Zulaufhöhe resultierender statischer Druck in seinem Innern aufgefangen werden muss, sondern eingangsseitig im Abwasserstauraum bzw. einem dort beispielsweise vorgesehenen Regen-Rückhaltebecken unerwartete Zulaufmengen anfallen können. Vergleichbares gilt bei einem Stromausfall, wenn die Pumpe den gefüllten Flüssigkeits-Sammelbehälter nicht leerpumpen kann. - Hier will die Erfindung Abhilfe schaffen.

Der Erfindung liegt das technische Problem zugrunde, ein derartiges Feststofftrennsystem so weiter zu entwickeln, dass insbesondere das Gehäuse des Flüssigkeits-Sammelbehälters etwaige Druckanstiege im Innern funktionssicher aufnehmen kann, und zwar bei zugleich materialsparender Bauweise und folglich mit reduzierten Kosten.

Zur Lösung dieser technischen Problemstellung ist ein gattungsgemäßes Feststofftrennsystem im Rahmen der Erfindung dadurch gekennzeichnet, dass wenigstens ein den Flüssigkeits-Sammelbehälter definierendes metallisches Gehäuse mit als Verstärkungsrippen ausgebildeten Wandverstärkungselementen an zumindest einer Gehäusewand ausgerüstet ist, wobei die Verstärkungsrippen zweier winklig sowie mit überwiegend senkrechter Kante aneinander anschließender benachbarter Gehäusewände des Gehäuses einen seitlichen Versatz aufweisen und nicht ineinander übergehen sowie wenigstens zwei voneinander verschiedene Raumebenen beschreiben, die überwiegend parallel und beabstandet zueinander verlaufen.

Das Gehäuse des Flüssigkeits-Sammelbehälters ist erfindungsgemäß aus Metall gefertigt. Die Wandverstärkungselemente sind in die Gehäusewand als Wandverstärkungen integriert.

Im Rahmen der Erfindung erfährt also zumindest das den Flüssigkeits-Sammelbehälter definierende Gehäuse eine Verstärkung durch die Wandverstärkungselemente an der zumindest einen Gehäusewand. Grundsätzlich kann auch das den Sperrstoff-Sammel-behälter aufnehmende Gehäuse mit solchen Wandverstärkungseiementen ausgerüstet werden. Im Regelfall reicht es jedoch aus, das Gehäuse für den Flüssigkeits-Sammel-behälter entsprechend auszugestalten, weil der Flüssigkeits-Sammelbehälter gegenüber dem Zulauf bzw. einem Zulaufverteiler die größte Zulaufhöhe aufweist und das Abwasser den Sperrstoff-Sammelbehälter passiert und in dem Flüssigkeits-Sammelbehälter gesammelt wird, so dass primär dort etwaige Druckspitzen des Abwasserdruckes beobachtet werden. Jedenfalls sorgen die Wandverstärkungselemente dafür, dass solche Druckspitzen einfach, funktionssicher und kostengünstig aufgenommen werden.

In diesem Zusammenhang hat es sich besonders bewährt, dass die Wandverstärkungselemente als Verstärkungsrippen ausgebildet sind. Außerdem ist die Auslegung meistens so getroffen, dass die Verstärkungsrippen zwischen zwei Gehäuse-kanten durchgängig verlaufen, also von einer zur anderen Gehäusekante jeweils benachbarter und angeschlossener Wandteile bzw. Gehäusewände reichen.

Eine besonders kostengünstige Auslegung sieht vor, dass die Verstärkungsrippen als Gehäuseeinformungen und/oder Gehäuseausformungen ausgebildet sind. In diesem Fall stellen die Verstärkungsrippen integrale Bestandteile der jeweiligen Gehäusewand dar. Außerdem wird meistens so gearbeitet, dass die Verstärkungsrippen als rinnenförmige Gehäusesicken ausgelegt sind. Solche rinnenförmigen Gehäusesicken können in die einzelnen Wandteile bzw. Gehäusewände problemlos eingebracht werden. Denn das Gehäuse setzt sich typischerweise aus Metallplatten und insbesondere Edelstahlplatten zusammen, die im Regelfall miteinander verschweißt werden. D. h., das Gehäuse für den Flüssigkeits-Sammelbehälter und/oder den Sperrstoff-Sammelbehälter ist jeweils metallisch ausgelegt.

Um nun die Verstärkungsrippen bzw. rinnenförmigen Gehäusesicken in diese die einzelnen Wandteile bzw. Gehäusewände definierenden Metallplatten einzubringen, wird beispielsweise so vorgegangen, dass die fragliche Gehäusesicke mit Hilfe einer Sickenmaschine unter Rückgriff auf wenigstens zwei Sickenrollen in die zugehörige Metallplatte gedrückt wird. Durch Auswahl der Sickenrolle kann die Querschnittsform der solchermaßen realisierten Gehäusesicke vorgegeben werden. Andere und besonders bevorzugte Varianten zur Realisierung der Verstärkungsrippen bzw. rinnenförmigen Gehäusesicken sehen vor, dass die betreffende Metallplatte durch Abkanten und/oder Tiefziehen eine gewünschte Verformung erfährt.

Tatsächlich hat es sich in diesem Zusammenhang bewährt, wenn die jeweilige Verstärkungsrippe bzw. die an dieser Stelle meistens vorgesehene rinnenförmige Gehäusesicke im Querschnitt dreieckförmig, halbkreisförmig, trapezförmig etc. ausgebildet ist. Dabei liegt es insgesamt im Rahmen der Erfindung, sowohl mit gradlinigen rinnenförmigen Gehäusesicken als auch bogenförmigen rinnenförmigen Gehäusesicken oder sogar sinusförmigen rinnenförmigen Gehäusesicken zu arbeiten. Tatsächlich wird eine umso höhere Versteifungswirkung beobachtet, je ungleichmäßiger die betreffende rinnenförmige Gehäusesicke verläuft. Aus Gründen einer einfachen und kostengünstigen Fertigung wird man jedoch meistens mit geradlinigen rinnenförmigen Gehäusesicken arbeiten.

Um die beengten Platzverhältnisse bei der Aufstellung solcher Feststofftrennsysteme in beispielsweise vorhandenen oder vorgefertigten Schächten beherrschen zu können, sind besonders kompakte Gehäuseabmessungen des Flüssigkeits-Sammelbehälters bzw. des erfindungsgemäßen Feststofftrennsystems insgesamt erforderlich. Dem trägt die Erfindung unter anderem dadurch Rechnung, dass sich das betreffende Gehäuse an seiner Oberfläche größtenteils in Innenrippenbereiche und Außenrippenbereiche aufteilt. Die Innenrippenbereiche werden typischerweise dort beobachtet, wo in Wandnähe der betreffenden Gehäusewand oder des betreffenden Wandteils des Gehäuses andere Aggregate aufgestellt werden oder Platz finden müssen, wie beispielsweise die obligatorische Pumpe. Dahingegen sind Außenrippenbereiche typischerweise dort vorgesehen, wo keine beengten Platzverhältnisse beobachtet werden, beispielsweise im Bereich des Zulaufs.

Außerdem trägt die Aufteilung des Gehäuses an seiner Oberfläche größtenteils in die Innenrippenbereiche und Außenrippenbereiche der Behälterfüllung und in diesem Zusammenhang etwaig gebildeter Luftpolster Rechnung, die zur optimalen Raumausnutzung zu vermeiden sind. So wird man typischerweise in deckennahen Bereichen der Gehäusekanten durchweg mit Innenrippen arbeiten, um an dieser Stelle die Bildung von Luftpolstern zu vermeiden. Allgemein ist die Auslegung so getroffen, dass die Verstärkungsrippen so angeordnet und ausgeformt sind, dass sich im Innern des Flüssigkeits-Sammelbehälters bzw. dessen Gehäuses keine Luftpolster bilden. Dabei wird man meistens so vorgehen, dass etwaige Luftpolster keine Sackgasse im Gehäuse erreichen können, sondern vielmehr ein Behälterteil zur Verfügung steht, in welchen das betreffende Luftpolster entweichen kann.

Außerdem verfügen die fraglichen Verstärkungsrippen in diesem Kontext über eine insgesamt ablagerungsfreie Gestaltung. Das heißt, an oder auf den Verstärkungsrippen bilden sich hierdurch im Innen- und/oder Außenbereich keine Ablagerungen. Das geschieht durch eine entsprechende Ausformung oder Einformung der Verstärkungsrippen respektive deren Oberfläche. Die fraglichen Einformungen oder Ausformungen zur Darstellung der betreffenden Verstärkungsrippe können auch geneigt gegenüber dem zugehörigen Wandteil bzw. der Gehäusewand verlaufen.

Bei der Auslegung des Gehäuses kommt es nicht nur darauf an, den beengten Bauraum möglichst optimal zu nutzen und etwaige Luftpolster im Innern zu verhindern sowie die Stabilität zur Aufnahme von Druckspitzen zu erhöhen. Sondern es sind auch Schmutzablagerungen zu vermeiden. An dieser Stelle schlägt die Erfindung vor, dass die jeweilige Verstärkungsrippe im Bereich der Gehäusekante in eine Aussparung respektive Ausformung der winklig anschließenden Gehäusewand übergeht. Da sich die jeweilige Verstärkungsrippe im Regelfall von einer zur gegenüberliegenden Gehäusekante erstreckt, sind jeweils die Bereiche der zugehörigen Gehäusekanten in diesem Kontext zu betrachten.

Handelt es sich beispielsweise bei der jeweiligen Verstärkungsrippe um eine Innenrippe, so geht diese Innenrippe in eine der Form der Innenrippe folgende Aussparung der winklig anschließenden Gehäusewand über. Diese Aussparung kann beispielsweise durch eine Ausklinkung der anschließenden Gehäusewand erreicht und umgesetzt werden. Ist die Verstärkungsrippe dagegen als Außenrippe ausgelegt, schließt die winklig an der Gehäusekante angebrachte Gehäusewand mit einer Ausformung an, um die Verstärkungsrippe nach außen hin zu verschließen und möglichst glattflächige Übergänge zur Verfügung zu stellen.

Das ist aus hygienischer Sicht erforderlich, um etwaige Ablagerungen oder ein Anstauen von Flüssigkeit zu vermeiden, und zwar nicht nur im Innern des Flüssigkeits-Sammelbehälters, sondern auch von beispielsweise Regenwasser an der Außenoberfläche,

Im Rahmen der Erfindung hat es sich als besonders günstig erwiesen, dass die Verstärkungsrippen zweier winklig aneinander anschließender Wandteile bzw. Gehäusewände des Gehäuses wenigstens zwei voneinander verschiedene Raumebenen, beispielsweise in Gestalt von Spiegelebenen, beschreiben. Diese voneinander verschiedenen Raumebenen können im einfachsten Fall beabstandet zueinander verlaufen. Das ist beispielsweise dann der Fall, wenn zwei Wandteile an einer Gehäusekante winklig aneinander angeschlossen sind und die Verstärkungsrippe an dem einen Wandteil nicht in die Verstärkungsrippe des anderen Wandteils übergeht. Vielmehr wird an dieser Stelle bewusst ein Versatz der beiden Verstärkungsrippen realisiert, um insgesamt die Steifigkeit zu erhöhen.

Als weitere Alternative ist es auch möglich, dass die von den Verstärkungsrippen zweier winklig aneinander anschließender Wandteile des Gehäuses definierten Raumebenen nicht nur voneinander beabstandet sind und parallel zueinander verlaufen, sondern sich im Raum kreuzen. Das ist beispielsweise dann der Fall, wenn die Verlaufslinie der Verstärkungsrippe die Fläche des anschließenden Wandteils an der Gehäusekante unter einem von 90° abweichenden Winkel schneidet, also wenn man so will "schräg" schneidet. Derartige Verläufe der Verstärkungsrippen sind als insgesamt ungleichmäßig zu qualifizieren und resultieren in einer erhöhten sowie gewünschten Versteifungswirkung.

Im Ergebnis wird ein Feststofftrennsystem zur Verfügung gestellt, das sich durch ein besonders steif ausgelegtes Gehäuse auszeichnet, welches primär den Flüssigkeits-Sammelbehälter definiert. Tatsächlich ist das fragliche Gehäuse problemlos in der Lage, vom Normalbetrieb abweichende Druckspitzen im Innern aufnehmen zu können. Das gelingt besonders kostengünstig durch die in die einzelnen Wandteile bzw. Gehäusewände des Gehäuses integrierten Verstärkungsrippen bzw. durchgängigen Gehäusesicken. Diese sind darüber hinaus so ausgelegt und über die Oberfläche des Gehäuses verteilt angeordnet, dass sowohl den beengten Einbauverhältnissen als auch einem möglichst großen Volumen des Flüssigkeits-Sammelbehälters Rechnung getragen wird. Zugleich bietet das Gehäuse ein Minimum an Angriffsfläche für etwaige Ablagerungen und ist so ausgelegt, dass möglichst Luftpolster im Innern erst gar nicht entstehen können.

Das Gehäuse selbst kann grundsätzlich jedwede Form annehmen, setzt sich jedoch üblicherweise aus geometrischen und meistens prismatischen Grundformen zusammen, wobei selbstverständlich nicht nur gerade Wandteile beobachtet werden, sondern auch gekrümmte Wandteile realisiert werden können. Das alles lässt sich unter Berücksichtigung der eingebrachten Gehäusesicken sowie unter Berücksichtigung der jeweils miteinander verschweißten Wandteile problemlos sowie kostengünstig umsetzen und realisieren. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine Gesamtdarstellung des erfindungsgemäßen Feststofftrennsystems,
- Fig. 2: eine Einzeldarstellung des Flüssigkeits-Sammelbehälters und
- Fig. 3: eine Ansicht auf den Flüssigkeits-Sammelbehälter nach Fig. 2 aus Richtung A bzw. Richtung B.

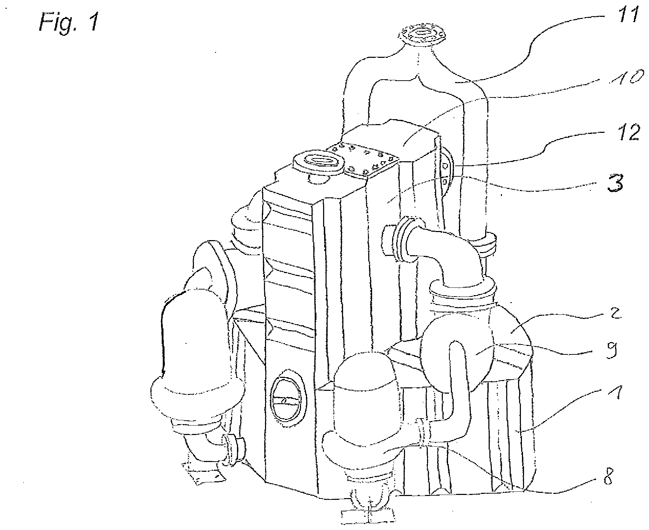

In den Figuren ist ein Feststofftrennsystem in der Ausführungsform als Abwasserhebeanlage dargestellt, die über einen Zulauf 12 verfügt, über den mit Sperrstoffen belastetes Abwasser zugeführt wird. Das gesamte in der Fig. 1 wiedergegebene Feststoffsystem kann in einem nicht ausdrücklich dargestellten Schacht aus beispielsweise Beton aufgenommen werden. Über den Zulauf 12 gelangt das Abwasser zunächst in einen Sperrstoff-Sammelbehälter 9 für hierdurch geführtes und mit den Sperrstoffen belastetes Abwasser. Ausgangsseitig des Sperrstoff-Sammelbehälters 9 ist eine Pumpe 8 vorgesehen, die mit dem Boden des nicht dargestellten Abwasserschachtes verbunden ist und auf diesem aufsteht. Man erkennt, dass die Pumpe 8 aufgrund beengter Platzverhältnisse im Innern des Abwasserschachtes ganz nah an einen Flüssigkeits-Sammelbehälter 1, 2, 3; 10 herangerückt ist.

Der Flüssigkeits-Sammelbehälter 1, 2, 3; 10 dient dazu, das von den Sperrstoffen befreite und in dem Sperrstoff-Sammelbehälter 9 vorgereinigte Abwasser aufzunehmen und zu sammeln. Sobald das Flüssigkeitsniveau in dem Flüssigkeits-Sammelbehälter 1, 2, 3; 10 einen vorgegebenen Wert überschritten hat, wird die Pumpe 8 eingeschaltet und sorgt dafür, dass das vorgereinigte Abwasser aus dem Flüssigkeits-Sammelbehälter 1, 2, 3; 10 die Pumpe 8 über den Sperrstoff-Sammelbehälter 9 und schließlich eine Ableitung 11 abgeführt wird.

Im Rahmen des Ausführungsbeispiels verfügt der Flüssigkeits-Sammelbehälter 1, 2, 3; 10 über ein ihn definierendes Gehäuse 1, 2, 3; 10, welches vorliegend mit Wandverstärkungselementen 4.1, 4.2; 5, 7 an zumindest einer Gehäusewand 1, 2, 3 ausgerüstet ist. Im Ausführungsbeispiel sind lediglich die Gehäusewände 1, 2, 3 mit Wandverstärkungselementen 4.1, 4.2; 5, 7 ausgerüstet, wohingegen eine kopfseitig abschließende Gehäusewand 10 nicht mit derartigen Wandverstärkungselementen 4.1, 4.2; 5,7 ausgerüstet ist, wenngleich dies selbstverständlich auch möglich ist.

Tatsächlich erkennt man verschiedene Gehäusewände 1, 2, 3 des Gehäuses 1, 2,3; 10 des Flüssigkeits-Sammelbehälters 1, 2, 3; 10, die nachfolgend noch näher und getrennt voneinander in Bezug genommen werden. Einzelne Wandteile bzw. Gehäusewände 1, 2, 3; 10 des Gehäuses 1, 2, 3; 10 sind jeweils aus Metallplatten und insbesondere Edelstahlplatten aufgebaut und werden im Bereich von Gehäusekanten miteinander verschweißt. D. h., das Gehäuse 1, 2, 3; 10 des Flüssigkeits-Sammelbehälters 1, 2, 3; 10 ist metallisch ausgelegt. Gleiches mag für das Gehäuse des Sperrstoff-Sammelbehälters 9 gelten.

Man erkennt, dass die Wandverstärkungselemente 4.1, 4.2; 5, 7 insgesamt als Verstärkungsrippen ausgebildet sind. Tatsächlich handelt es sich bei den fraglichen Verstärkungsrippen um rinnenförmige Gehäusesicken 4.1, 4.2; 5, 7. Die Gehäusesicken 4.1, 4.2; 5, 7 sind in die jeweilige Gehäusewand 1, 2, 3 bzw. das zugehörige Wandteil integriert und in die zur Darstellung des Wandteils bearbeitete Metallplatte eingebracht worden. Das kann durch Abkanten und/oder Tiefziehen erfolgen. Die einzelnen Gehäusesicken 4.1, 4.2; 5, 7 verlaufen durchgängig zwischen zwei Gehäusekanten.

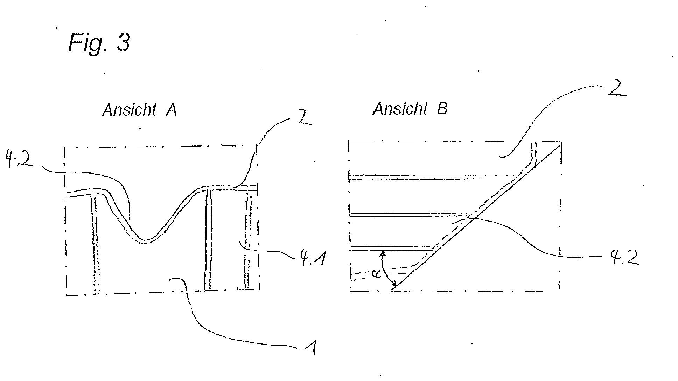

Man erkennt, dass sowohl nach innen weisende rinnenförmige Gehäusesicken 4.1, 4.2; 7 realisiert sind, als auch Gehäusesicken 5, die nach außen weisen. Dementsprechend teilt sich das Gehäuse 1, 2, 3 an seiner Oberfläche größtenteils in einen Innenrippenbereich 4.1, 4.2; 7 und einen Außenrippenbereich 5 auf. Die jeweilige Verstärkungsrippe bzw. Gehäusesicke 4.1, 4.2 ist im Querschnitt dreieckförmig gestaltet, wie die Ansicht A nach der Fig. 3 deutlich macht. Auch die Gehäusesicke 7 verfügt über eine dreieckige Gestalt im Querschnitt. Aus Stabilitätsgründen wird man das Dreieck typischerweise so wählen, dass dieses gleichschenklig mit zwei nach innen oder nach außen weisenden gleich langen Schenkeln ausgerüstet ist, wie dies die Ansicht A nach der Fig. 3 deutlich macht. Grundsätzlich kann an dieser Stelle auch ein gleichseitiges Dreieck vorgesehen werden.

Demgegenüber ist die nach außen weisende Gehäusesicke 5 im Querschnitt trapezförmig ausgebildet. Auch in diesem Fall empfiehlt sich aus Stabilitätsgründen ein gleichschenkliges Trapez. Darüber hinaus können selbstverständlich auch andere Querschnittsformen für die Gehäusesicken 4.1, 4.2; 5, 7 vorgesehen werden, beispielsweise solche mit halbkreisförmigem Querschnitt.

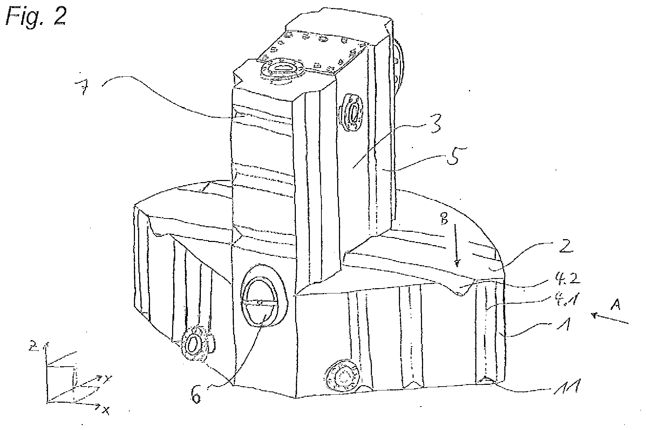

Anhand der Fig. 2 wird deutlich, dass die Verstärkungsrippen 4.1, 4.2; 5, 7 zweier winklig aneinander anschließender Wandteile bzw. Gehäusewände 1, 2, 3; 10 des Gehäuses 1, 2, 3; 10 wenigstens zwei voneinander verschiedene Raumebenen beschreiben. Das wird anhand einer Betrachtung der Fig. 2 und 3 besonders deutlich. Beispielsweise sind die beiden Verstärkungsrippen bzw. Gehäusesicken 4.1 und 4.2 in der Darstellung nach der Fig. 2 räumlich versetzt zueinander angeordnet, wenn man ihren Übergang im Bereich der Gehäusekante an der Verbindungsstelle zwischen dem Wandteil 1 und dem Wandteil 2 bzw. zwischen den Gehäusewänden 1, 2 betrachtet. Das wird auch anhand der Ansicht A sowie B nach der Fig. 3 besonders deutlich.

Durch diesen seitlichen Versatz der zugehörigen Verstärkungsrippen bzw. Gehäusesicken 4.1, 4.2 in betrachtetem Beispielfall wird eine besonders große Stabilität und Steifigkeit des Gehäuses 1, 2, 3; 10 des Flüssigkeits-Sammelbehälters 1, 2, 3; 10 zur Verfügung gestellt. Denn die beiden von den Verstärkungsrippen bzw. Gehäusesicken 4.1, 4.2 im Beispielfall aufgespannten Raumebenen verlaufen beabstandet zueinander und im betrachteten Beispielfall überwiegend parallel zueinander. Das gilt jedenfalls solange, wie von einer überwiegend senkrechten Kante bzw. Gehäusekante zwischen den beiden betrachteten Wandteilen bzw. Gehäusewänden 1, 2 ausgegangen wird, wie dies in der Ansicht B nach der Fig. 3 strichpunktiert dargestellt ist.

Darüber hinaus können sich die fraglichen und von den Verstärkungsrippen bzw. Gehäusesicken 4.1, 4.2; 5, 7 definierten Raumebenen auch winklig schneiden. Das ist in der Ansicht B nach der Fig. 3 zu erkennen. Denn hier wird deutlich, dass die Gehäusesicke 4.2 im Wandteil 2 unter einem Winkel α auf den demgegenüber schräg verlaufende Wandteil 1 senkrecht hierzu im Kantenbereich trifft. Ein demgegenüber senkrechter Anschluss und eine folgerichtig senkrechte Kante ist in der Fig. 3 in der Ansicht B strichpunktiert dargestellt. Als Folge hiervon sind die von den Verstärkungsrippen bzw. Gehäusesicken 4.1, 4.2 aufgespannten Raumebenen winklig zueinander angeordnet und schneiden sich, was wiederum zur Erhöhung der Steifigkeit des gesamten Gehäuses 1, 2, 3; 10 führt.

Man erkennt schließlich noch, dass die jeweilige Verstärkungsrippe bzw. die Gehäusesicke 4.1, 4.2; 5, 7 im Bereich der Gehäusekante in eine Aussparung respektive Ausformung der winklig anschließende Gehäusewand übergeht. Weil es sich bei der Gehäusesicke 4.2 im Beispielfall um eine nach innen weisende Gehäusesicke 4.2 handelt, verfügt die winklig anschließende Gehäusewand 1 im Beispielfall der Fig. 2 im Bereich der fraglichen Gehäusesicke 4.2 über eine Aussparung. Diese Aussparung folgt der Querschnittsform der betrachteten Gehäusesicke 4.2 im gezeigten Beispiel. Selbstverständlich sind auch anders geformte Aussparungen denkbar und werden von der Erfindung umfasst. Ebenso Bohrungen in diesem Bereich.

Betrachtet man die nach außen weisende Gehäusesicke 5 an der Wand 3, so wird deutlich, dass in diesem Fall die winklig anschließende Gehäusewand bzw. der winklig anschließende Wandteil 10 mit einer der Trapezform entsprechenden Ausformung ausgerüstet wird. Auf diese Weise verfügt das realisierte Gehäuse 1, 2, 3; 10 über einen insgesamt glattflächigen Aufbau ohne Zerklüftungen und versteckte Hohlräume, die gegebenenfalls Ablagerungen begünstigen können. Auch ein Anstauen von Flüssigkeit im Innern wird hierdurch verhindert.

## Patentansprüche

1. Feststofftrennsystem, mit zumindest einem Sperrstoff-Sammelbehälter (9) für hierdurch geführtes und mit Sperrstoffen belastetes Abwasser, und mit einem Flüssigkeits-Sammelbehälter (1, 2, 3; 10) für das von Sperrstoffen befreite und in dem Sperrstoff-Sammelbehälter (9) vorgereinigte Abwasser,
**dadurch gekennzeichnet, dass** wenigstens ein metallisches Gehäuse mit Gehäusewänden (1, 2, 3; 10) den Flüssigkeits-Sammelbehälter definiert, wobei zumindest zwei Gehäusewände (1, 2, 3; 10) mit Wandverstärkungselementen (4.1, 4 2; 5, 7) ausgerüstet sind, die als Verstärkungsrippen ausgebildet sind, wobei die mindestens zwei Gehäusewände mit überwiegend senkrechter Kante aneinander anschließen, und die Verstärkungsrippen (4.1, 4.2; 5, 7) dieser Gehäusewände einen seitlichen Versatz aufweisen und nicht ineinander übergehen sowie wenigstens zwei voneinander verschiedene Raumebenen beschreiben, die überwiegend parallel und beabstandet zueinander verlaufen.

2. Feststofftrennsystem nach Anspruch 1, **dadurch gekennzeichnet, dass** die Verstärkungsrippen (4.1, 4.2, 5, 7) als Gehäuseeinformungen und/oder Gehäuseausformungen ausgebildet sind.

3. Feststofftrennsystem nach 1 oder 2, **dadurch gekennzeichnet, dass** die Verstärkungsrippen (4.1, 4.2, 5, 7) als rinnenförmige Gehäusesicken (4.1, 4.2; 5, 7) ausgelegt sind.

4. Feststofftrennsystem nach einem der Ansprüche 1 bis 3, **dadurch gekennzeichnet, dass** sich das Gehäuse (1, 2, 3; 10) an seiner Oberfläche größtenteils in Innenrippenbereiche (4.1, 4.2; 7) und Außenrippenbereiche (5) aufteilt.

5. Feststofftrennsystem nach einem der Ansprüche 1 bis 4, **dadurch gekennzeichnet, dass** die jeweilige Verstärkungsrippe (4.1, 4.2, 5, 7) im Querschnitt dreieckförmig, halbkreisförmig, trapezförmig ausgebildet ist.

6. Feststofftrennsystem nach einem der Ansprüche 1 bis 5, **dadurch gekennzeichnet, dass** die jeweilige Verstärkungsrippe (4.1, 4.2, 5, 7) im Bereich der Gehäusekante in eine Aussparung respektive Ausformung der winklig anschließenden benachbarten Gehäusewand (1, 2, 3; 10) übergeht.

7. Feststofftrennsystem nach einem der Ansprüche 1 bis 6, **dadurch gekennzeichnet, dass** das Gehäuse (1, 2, 3; 10) aus Metallplatten, insbesondere Edelstahlplatten, aufgebaut ist.

8. Feststofftrennsystem nach einem der Ansprüche 1 bis 7, **dadurch gekennzeichnet, dass** die Wandverstärkungselemente (4.1, 4.2; 5, 7) so angeordnet und ausgeformt sind, dass sich keine Luftpolster bilden.

9. Feststofftrennsystem nach einem der Ansprüche 1 bis 8, **dadurch gekennzeichnet, dass** die Wandverstärkungselemente (4.1, 4,2; 5, 7) eine ablagerungsfreie Gestaltung im Innen- und/oder Außenbereich aufweisen.

## Claims

1. Solids separating system, having at least one bulky-material collecting tank (9) for wastewater which is guided through same and is loaded with bulky materials, and having a liquid collecting tank (1, 2, 3; 10) for the wastewater which has been rid of solids and has been pretreated in the bulky-material collecting tank (9), **characterized in that** at least one metallic housing having housing walls (1, 2, 3; 10) defines the liquid collecting tank, wherein at least two housing walls (1, 2, 3; 10) are provided with wall reinforcing elements (4.1, 4.2; 5, 7) which are in the form of reinforcing ribs, wherein the at least two housing walls adjoin one another with a predominantly vertical edge, and the reinforcing ribs (4.1, 4.2; 5, 7) of said housing walls are offset laterally and do not merge into one another, and describe at least two spatial planes which differ from one another and extend predominantly parallel and at a distance from one another.

2. Solids separating system according to Claim 1, **characterized in that** the reinforcing ribs (4.1, 4.2, 5, 7) are in the form of housing inward mouldings and/or housing outward mouldings.

3. Solids separating system according to Claim 1 or 2, **characterized in that** the reinforcing ribs (4.1, 4.2, 5, 7) are configured as channel-shaped housing beads (4.1, 4.2; 5, 7).

4. Solids separating system according to one of Claims 1 to 3, **characterized in that** the surface of the housing (1, 2, 3; 10) is mostly divided into inner rib regions (4.1, 4.2; 7) and outer rib regions (5).

5. Solids separating system according to one of Claims 1 to 4, **characterized in that** the respective reinforcing rib (4.1, 4.2, 5, 7) is triangular, semicircular or trapezoidal in cross section.

6. Solids separating system according to one of Claims 1 to 5, **characterized in that** the respective reinforcing rib (4.1, 4.2, 5, 7) merges in the region of the housing edge into a recess or outward moulding of the angularly adjoining, adjacent housing wall (1, 2, 3; 10).

7. Solids separating system according to one of Claims 1 to 6, **characterized in that** the housing (1, 2, 3; 10) is constructed from metal plates, in particular stainless steel plates.

8. Solids separating system according to one of Claims 1 to 7, **characterized in that** the wall reinforcing elements (4.1, 4.2; 5, 7) are arranged and shaped in such a manner that no air cushions are formed.

9. Solids separating system according to one of Claims 1 to 8, **characterized in that** the wall reinforcing elements (4.1, 4.2; 5, 7) have a deposition-free configuration in the inner and/or outer region.

## Revendications

1. Système de séparation de matière solide, comprenant au moins un récipient collecteur de matière isolante (9) destiné à des eaux usées guidées à travers celui-ci et contaminées par des matières isolantes, et comprenant un récipient collecteur de liquide (1, 2, 3 ; 10) destiné aux eaux usées débarrassées des matières isolantes et prétraitées dans le récipient collecteur de matière isolante (9),
**caractérisé en ce qu'**au moins un boîtier métallique doté de parois de boîtier (1, 2, 3 ; 10) définit le récipient collecteur de liquide, au moins deux parois de boîtier (1, 2, 3 ; 10) étant réalisées avec des éléments de renforcement de paroi (4.1, 4.2 ; 5, 7) qui sont réalisés sous la forme de nervures de renforcement, dans lequel les au moins deux parois de boîtier sont adjacentes l'une à l'autre par un bord substantiellement vertical, et les nervures de renforcement (4.1, 4.2 ; 5, 7) de ces parois de boîtier présentent un décalage latéral et ne se confondent pas, et décrivent au moins deux plans spatiaux différents l'un de l'autre qui s'étendent de manière substantiellement parallèle et espacée l'un par rapport à l'autre.

2. Système de séparation de matière solide selon la revendication 1, **caractérisé en ce que** les nervures de renforcement (4.1, 4.2, 5, 7) sont réalisées sous la forme d'empreintes de boîtier et/ou de saillies de boîtier.

3. Système de séparation de matière solide selon la revendication 1 ou 2, **caractérisé en ce que** les nervures de renforcement (4.1, 4.2, 5, 7) sont conçues sous la forme de moulures de boîtier (4.1, 4.2, 5, 7) en forme de rainure.

4. Système de séparation de matière solide selon l'une quelconque des revendications 1 à 3, **caractérisé en ce que** le boîtier (1, 2, 3 ; 10) est divisé au niveau de sa face supérieure en grande partie en zones de nervures intérieures (4.1, 4.2 ; 7) et en zones de nervures extérieures (5).

5. Système de séparation de matière solide selon l'une quelconque des revendications 1 à 4, **caractérisé en ce que** la nervure de renforcement (4.1, 4.2, 5, 7) respective est réalisée en section transversale de manière triangulaire, semi-circulaire, trapézoïdale.

6. Système de séparation de matière solide selon l'une quelconque des revendications 1 à 5, **caractérisé en ce que** la nervure de renforcement (4.1, 4.2, 5, 7) respective passe à un évidement ou une saillie de la paroi de boîtier (1, 2, 3 ; 10) voisine adjacente.

7. Système de séparation de matière solide selon l'une quelconque des revendications 1 à 6, **caractérisé en ce que** le boîtier (1, 2, 3 ; 10) est constitué de plaques métalliques, en particulier de plaques d'acier spécial.

8. Système de séparation de matière solide selon l'une quelconque des revendications 1 à 7, **caractérisé en ce que** les éléments de renforcement de paroi (4.1, 4.2 ; 5, 7) sont disposés et façonnés sans formation de coussins d'air.

9. Système de séparation de matière solide selon l'une quelconque des revendications 1 à 8, **caractérisé en ce que** les éléments de renforcement de paroi (4.1, 4.2 ; 5, 7) présentent une configuration sans dépôts dans la zone intérieure et/ou extérieure.
